# EUROPEAN PATENT SPECIFICATION

(11) **EP 2 186 708 B1**
(45) Date of publication and mention of the grant of the patent: **31.08.2011**
(21) Application number: 09252480.0
(22) Date of filing: 26.10.2009
(51) Int. Cl.: B62D 1/184

(54) **Clamping Device for an adjustable steering column**
Arretiervorrichtung für eine verstellbare Lenksäule
Dispositif de blocage pour colonne de direction réglable

(30) Priority: 07.11.2008 GB 0820387
(43) Date of publication of application: 19.05.2010
(73) Proprietor: NSK Steering Systems Europe Limited, Maidenhead, Berkshire SL6 6TB (GB)
(72) Inventor: Sikotra, Rajendra Gopalji, 50880 Ratingen (DE)
(74) Representative: Feakins, Graham Allan

(56) References cited:
- FR-A- 2 832 683
- FR-A- 2 872 473

## Description

This invention relates to a steering column having a clamping device, in particular for a vehicle having such an adjustable steering column.

Many such clamping devices are known which comprise two toothed racks which are brought into engagement with one another to clamp the steering column in a particular position and which are released to allow adjustment of the steering column.

A typical example of these clamping devices can be seen in EP-A-0 440 403. Moreover US 5027674 discloses a steering column with a clamping device according to the preamble of claim 1.

A particular problem that has been identified is the fact that the toothed racks do not always come into full tooth-in-tooth engagement with one another as intended, the worst scenario perhaps being that they can come only into tooth-on-tooth contact, in other words, where only the tips of the opposing teeth contact each other, which results in a virtual loss of clamping effect.

According to the present invention, there is provided a steering column with a clamping device comprising three toothed racks, two of the racks having teeth that face and are releasably engageable with teeth of the third rack, said two racks being independently moveable relative to the third rack by a common actuating member to clamp at least one of said two racks into tooth-in-tooth positive engagement with the teeth of the third rack.

The first and second racks may be fitted within or on a common guide member for movement towards and away from the third rack.

The first and second racks may be symmetrically mounted about the common actuating member.

The actuating member may include a reciprocable pin which can pass between the first and second racks, the pin extending substantially at right angles to the longitudinal extent of the third rack.

The reciprocable pin passes through a central slot extending longitudinally of the third rack.

The first and second racks on the one hand and the third rack on the other hand are moveable longitudinally relatively to one another.

In one case, the third rack may be secured to a fixed member such as a body part of a vehicle, with the first and second racks being shiftable longitudinally of themselves. The body part may be a vehicle steering column mounting bracket.

The moveable and fixed relationships between the first and second racks on the one hand and the third rack on the other hand may be the reverse of that just described, in both cases permitting e.g. the tilt and/or reach adjustment of the steering column. In other words, the third rack may be the rack that can be moved longitudinally of itself relatively to the first and second racks to provide the required degree of adjustment of the clamping device.

The first and second racks may each have a part remote from their teeth upon which a common pivoting lever is provided to act to perform the clamping operation.

The pivoting lever can be mounted on a pivot pin for pivotal movement about the pin and can be disc-shaped.

Those parts of the first and second racks remote from their teeth may be provided with a rounded formation to permit if necessary a rolling action with a surface of the pivoting lever.

The clamping force of the clamping device may be provided by effort applied to an end face of the clamping pin, which itself acts through the pivoting lever to drive one or both of the first and second racks into toothed engagement with the teeth of the third rack.

Alternatively, the clamping force may be applied to the opposite end of the reciprocable pin, so that it becomes a lifting pin.

In both cases, a cam arrangement may be provided to act on the reciprocable pin to produce the clamping/release movement.

To ensure that the teeth of at least the first or second rack engage in an effective manner with the teeth of the third rack, the first and second racks are so located in their guide that the teeth of one of those racks are always half a pitch out relative to the teeth of the third rack.

This means that a clamped condition can be achieved during clamping actuation with the pivoting actuating lever acting in an even manner (level) on both the first and second racks, so that both the first and second racks only partially engage with the teeth of the third rack, whilst providing a satisfactory clamping action, whilst avoiding the undesired, complete tooth-on-tooth situation with all teeth of the "first rack" (fixed or moveable) with the opposing "second rack" (moveable or fixed), as in the prior art constructions.

On the other hand, with the present construction, if the first and second racks are brought towards the teeth of the third rack such that either the first or second rack is in a tooth-on-tooth situation, then the teeth of the other of the first and second racks will, with the pivoting lever being in a tilted position, engage completely within the teeth of the third rack. However, the desired full clamping effect is provided by the toothed rack (first or second) which is in full toothed engagement with the third rack.

Resilient means may be provided to ensure that the teeth of the first and second racks are urged clear of the teeth of the third rack when the device is moved to its unclamped condition.

For a better understanding of the invention and to show how the same may be carried into effect, reference will now be made, by way of example, to the accompanying drawings, in which:-
Fig. 1 is a diagrammatic perspective view of the present clamping device,
Fig. 2 is a longitudinal sectional view showing the unclamping condition of the device,
Fig. 3 is a view similar to Fig. 2, but showing one possible clamped condition of the device,
Fig. 4 is a view similar to Fig. 2 and showing another possible clamped condition of the device,
Fig. 5 is a view similar to Fig. 3 and shows another form of clamping device, and
Fig. 6 is a side view of yet another form of clamping device shown in the clamping condition of Fig. 3.

Referring to the drawings, the clamping device has first and second toothed racks 1,2 with shoulders that can bear against a body 3.

The racks 1 and 2 are independently reciprocable about a central reciprocable lifting and clamping pin 4. Each toothed rack 1 and 2 has an upper part protruding from an outer surface of the body 3, the tip of each upper part being rounded and caused to bear against the underside of a disc-shaped pivoting lever 5, the lever 5 being pivoted on a pivot pin 6 passing through the clamping pin 4.

The clamping force of the clamping device is provided by effort applied to a disc end face 7 of the clamping pin 4.

The teeth of the racks 1 and 2 face teeth of a third rack 8, which has a longitudinal central slot 8A through which the clamping pin 4 extends. The rack 8 is supported by a body member 9.

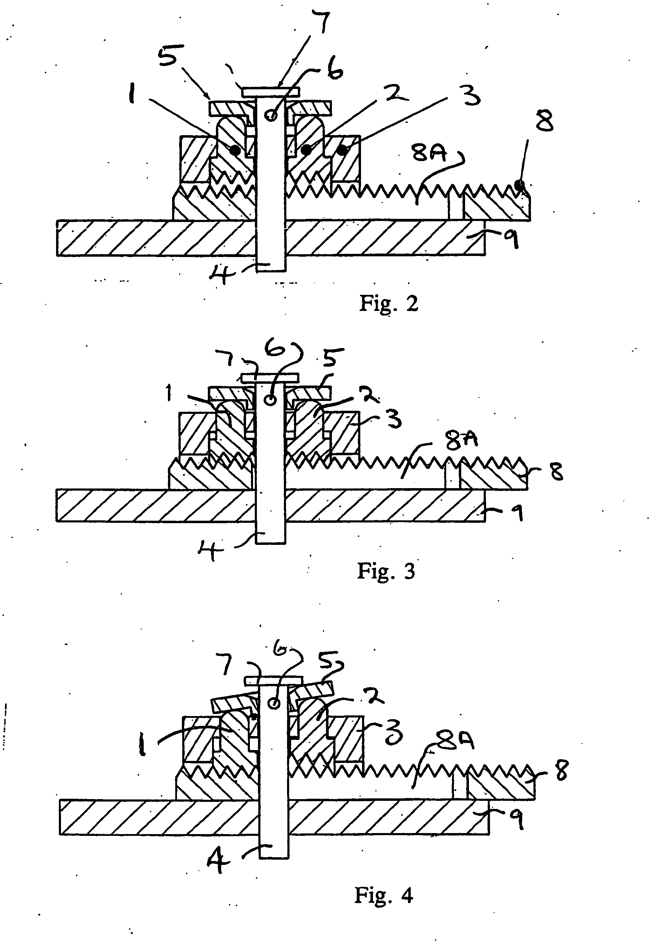

Figure 2 shows the unclamped condition, where, in the example shown, the rack 8 is allowed to move freely in its axial direction.

When a clamping force is applied via the clamping pin 4, transmitting through the pivot pin 6 to the clamping lever/disc 5 onto the two clamping racks 1 and 2, one of two things can happen.

Firstly, as shown in Figure 3, the teeth of both racks 1 and 2 can engage partially with the teeth of the rack 8, with no tooth-on-tooth clash. The combined clamping effect of the two racks 1 and 2 with the rack 8 is sufficient.

On the other hand, as shown in Figure 4, a clamped condition can be achieved with one of the racks 1 or 2 in a tooth-to-tooth clash with the teeth of the rack 8, with the other of the racks 1 or 2 having full engagement, thus also achieving the required clamping effect.

This is achieved because the racks 1 and 2 are positioned such that they are half a pitch out relative to the teeth of the rack 8.

The clamping distance is always constant wherever the rack 8 is positioned, so that a constant lift cam can be employed.

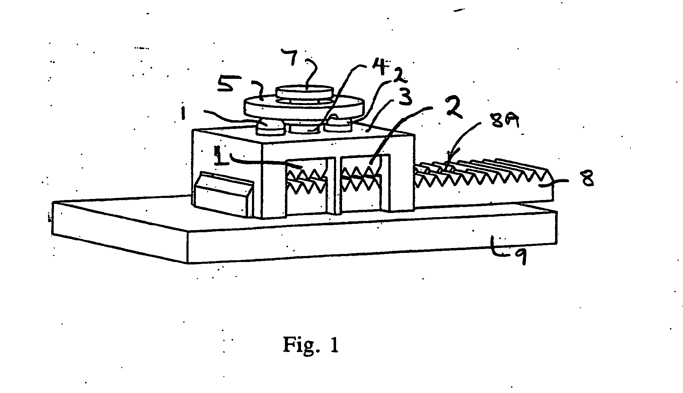

Figs. 1 to 4 show one form of the pivoting lever 5 acting in conjunction with the racks 1 and 2 on the one hand and the head 7 of the clamping pin 4 on the other hand. Here, the lever 5 pivots about the pivot pin 6.

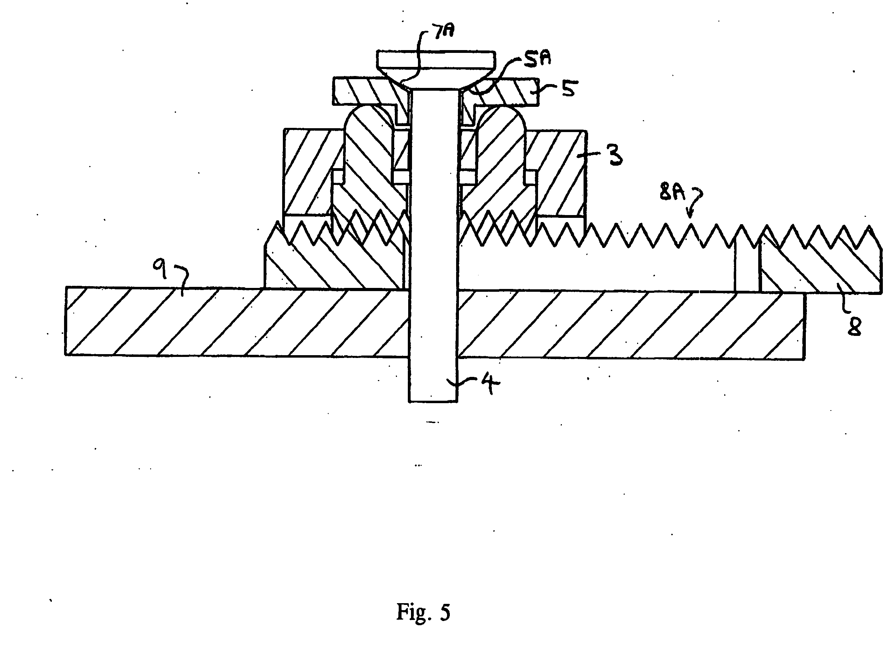

In Fig. 5, the lever 5 can tilt about the axis of the clamping pin 4 by being provided with an upper concavity 5A in which non-matchingly fits a convex or rounded lower portion 7A of the head 7 of the clamping pin 4.

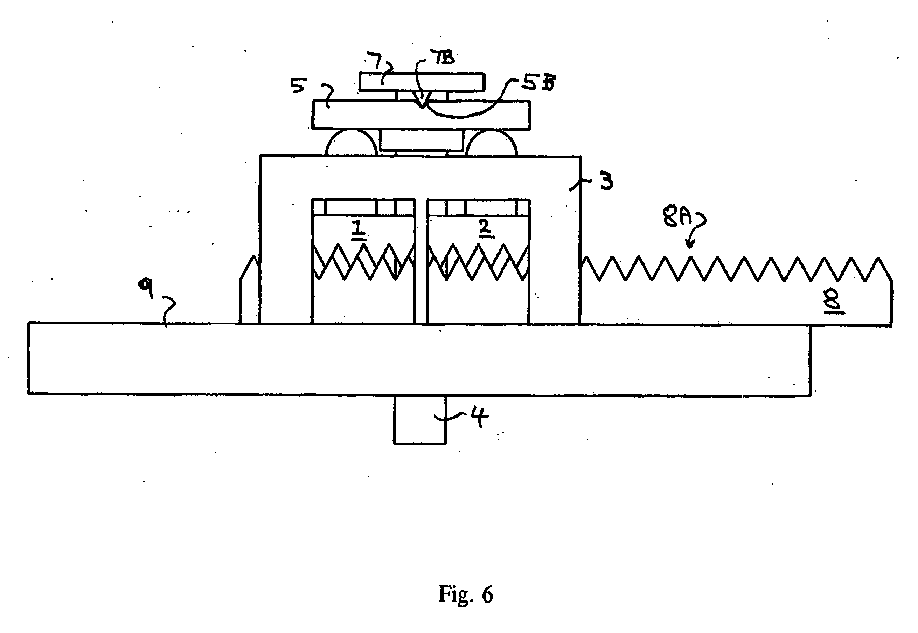

The embodiment of Fig. 6 shows the head 7 of the clamping pin 4 with a fulcrum 7B (at least one of two) each fitting in a V-notch 5B in the facing upper face of the pivoting lever 5.

## Claims

1. A steering column with a clamping device **characterised by** three toothed racks, two of the racks (1,2) having teeth that face and are releasably engageable with teeth of the third rack (8), said two racks (1,2) being independently moveable relative to the third rack (8) by a common actuating member (4) to clamp at least one of said two racks into tooth-in-tooth positive engagement with the teeth of the third rack.

2. A steering column according to claim 1, wherein the first and second racks (1,2) are fitted within or on a common guide member (3) for movement towards and away from the third rack (8).

3. A steering column according to claim 2, wherein the first and second racks (1,2) are symmetrically mounted about the common actuating member (4).

4. A steering column according to claim 1, 2 or 3,
wherein the actuating member includes a reciprocable clamping pin (4) which passes between the first and second racks (1,2), the reciprocable pin extending substantially at right angles to the longitudinal extent of the third rack (8).

5. A steering column according to claim 4, wherein the reciprocable pin (4) passes through a central slot (8A) extending longitudinally of the third rack (8).

6. A steering column according to any one of the preceding claims, wherein the first and second racks (1,2) on the one hand and the third rack (8) on the other hand are moveable longitudinally relatively to one another.

7. A steering column according to any one of the preceding claims, wherein the first and second racks (1,2) each have a part remote from their teeth upon which a common pivoting lever (5) is provided to act to perform the clamping operation.

8. A steering column according to claim 7, wherein the pivoting lever (5) is mounted on a pivot pin (6) for pivotal movement about the pin, and/or the pivoting lever (5) and the reciprocable clamping pin (4) of claim 4 are provided with inter-contacting concave and convex surfaces (5A, 7A) about which the lever can tilt, and/or the pivoting lever (5) is provided with at least one notch (5B) into which at least one fulcrum (7B) of the reciprocable clamping pin of claim 4 can fit to allow the lever to tilt.

9. A steering column according to claim 4 or to any one of claims 5 to 8 as appendant to claim 4, wherein the clamping force of the clamping device is arranged to be provided by effort applied to an end face of the reciprocable clamping pin (4) and/or a further force is arranged to be applied at the opposite end of the reciprocable pin so as to cause it to act as a lifting pin to allow the first and second racks (1, 2) to lift clear of the third rack (8).

10. A steering column according to claim 9, and including a cam arrangement provided to act on the reciprocable pin (4) to produce the clamping/release movement.

11. A steering column according to any one of the preceding claims, wherein the teeth of the first and second racks (1,2) are located so that the teeth of one of those racks are always half a pitch out relative to the teeth of the third rack (8).

12. A steering column according to any one of the preceding claims and including resilient means provided to ensure that the teeth of the first and second racks (1,2) are urged clear of the teeth of the third rack (8) when the device is in its unclamped condition.

13. An adjustable steering column assembly for a vehicle according to any one of the preceding claims wherein the steering column is rake and/or reach adjustable.

## Patentansprüche

1. Eine Lenksäule mit einer Arretiervorrichtung, **gekennzeichnet durch** drei Zahnschienen, wobei zwei der Schienen (1, 2) Zähne aufweisen, die Zähnen der dritten Schiene (8) zugewandt sind und in diese lösbar eingreifen können, wobei die zwei Schienen (1, 2) **durch** ein gemeinsames Betätigungselement (4) relativ zu der dritten Schiene (8) unabhängig beweglich sind, um mindestens eine der zwei Schienen in einem formschlüssigen Zahn-in-Zahn-Eingriff mit den Zähnen der dritten Schiene zu arretieren.

2. Lenksäule gemäß Anspruch 1, wobei die erste und zweite Schiene (1, 2) zur Bewegung zu und weg von der dritten Schiene (8) innerhalb oder auf einem gemeinsamen Führungselement (3) angebracht sind.

3. Lenksäule gemäß Anspruch 2, wobei die erste und zweite Schiene (1, 2) symmetrisch um das gemeinsame Betätigungselement (4) montiert sind.

4. Lenksäule gemäß Anspruch 1, 2 oder 3, wobei das Betätigungselement einen hin und her bewegbaren Arretierstift (4) umfasst, der zwischen der ersten und der zweiten Schiene (1, 2) verläuft, wobei sich der hin und her bewegbare Stift im Wesentlichen im rechten Winkel zu der Längserstreckung der dritten Schiene (8) erstreckt.

5. Lenksäule gemäß Anspruch 4, wobei der hin und her bewegbare Stift (4) durch einen zentralen Schlitz (8A) verläuft, der sich längs der dritten Schiene (8) erstreckt.

6. Lenksäule gemäß einem der vorhergehenden Ansprüche, wobei die erste und zweite Schiene (1, 2) einerseits und die dritte Schiene (8) andererseits relativ zueinander längs bewegbar sind.

7. Lenksäule gemäß einem der vorhergehenden Ansprüche, wobei die erste und zweite Schiene (1, 2) jeweils einen von ihren Zähnen ferngelegenen Teil aufweisen, auf dem ein gemeinsamer Schwenkhebel (5) bereitgestellt ist, um dahingehend zu wirken, den Arretiervorgang durchzuführen.

8. Lenksäule gemäß Anspruch 7, wobei der Schwenkhebel (5) auf einem Schwenkstift (6) zur Schwenkbewegung um den Stift montiert ist und/oder der Schwenkhebel (5) und der hin und her bewegbare Arretierstift (4) des Anspruchs 4 mit einer konkaven und einer konvexen Oberfläche (5A, 7A) versehen sind, die einander berühren und um die sich der Hebel neigen kann, und/oder der Schwenkhebel (5) mit mindestens einer Kerbe (5B) versehen ist, in die mindestens ein Drehpunkt (7B) des hin und her bewegbaren Arretierstifts aus Anspruch 4 passen kann, um ein Neigen des Hebels zu ermöglichen.

9. Lenksäule gemäß Anspruch 4 oder einem der Ansprüche 5 bis 8, wie von Anspruch 4 abhängig, wobei die Arretierkraft der Arretiervorrichtung eingerichtet ist, um durch einen Kraftaufwand bereitgestellt zu werden, der auf eine Endfläche des hin und her bewegbaren Arretierstifts (4) angewendet wird, und/oder eine weitere Kraft eingerichtet ist, um an dem gegenüberliegenden Ende des hin und her bewegbaren Stifts angewendet zu werden, um zu bewirken, dass er als Hebestift wirkt, damit die erste und zweite Schiene (1, 2) von der dritten Schiene (8) freigehoben werden können.

10. Lenksäule gemäß Anspruch 9, die zudem eine Nockeneinrichtung umfasst, welche bereitgestellt ist, um auf den hin und her bewegbaren Stift (4) zu wirken, um die Arretier-/Lösebewegung zu produzieren.

11. Lenksäule gemäß einem der vorhergehenden Ansprüche, wobei die Zähne der ersten und zweiten Schiene (1, 2) so angeordnet sind, dass die Zähne einer dieser Schienen relativ zu den Zähnen der dritten Schiene (8) immer um eine halbe Zahnweite versetzt sind.

12. Lenksäule gemäß einem der vorhergehenden Ansprüche, die zudem ein elastisches Mittel umfasst, das bereitgestellt ist um sicherzustellen, dass die Zähne der ersten und zweiten Schiene (1, 2) von den Zähnen der dritten Schiene (8) frei gedrängt werden, wenn sich die Vorrichtung in ihrem nicht arretierten Zustand befindet.

13. Eine verstellbare Lenksäulenanordnung für ein Fahrzeug gemäß einem der vorhergehenden Ansprüche, wobei die Lenksäule neigungs- und/oder reichweitenverstellbar ist.

## Revendications

1. Une colonne de direction avec un dispositif de blocage **caractérisée par** trois crémaillères dentées, deux des crémaillères (1, 2) ayant des dents qui font face à et peuvent se mettre en prise de façon libérable avec des dents de la troisième crémaillère (8), lesdites deux crémaillères (1, 2) pouvant être indépendamment déplacées par rapport à la troisième crémaillère (8) par un élément d'actionnement commun (4) afin de bloquer au moins une desdites deux crémaillères en prise positive dent à dent avec les dents de la troisième crémaillère.

2. Une colonne de direction selon la revendication 1, dans laquelle les première et deuxième crémaillères (1, 2) sont emboîtées au sein de ou sur un élément formant guide commun (3) pour effectuer un déplacement en direction et s'éloignant de la troisième crémaillère (8).

3. Une colonne de direction selon la revendication 2, dans laquelle les première et deuxième crémaillères (1, 2) sont symétriquement montées autour de l'élément d'actionnement commun (4).

4. Une colonne de direction selon la revendication 1, la revendication 2 ou la revendication 3, dans laquelle l'élément d'actionnement inclut une broche de blocage inversable (4) qui passe entre les première et deuxième crémaillères (1, 2), la broche inversable s'étendant substantiellement à angle droit par rapport à l'étendue longitudinale de la troisième crémaillère (8).

5. Une colonne de direction selon la revendication 4, dans laquelle la broche inversable (4) passe à travers une fente centrale (8A) s'étendant longitudinalement à la troisième crémaillère (8).

6. Une colonne de direction selon n'importe laquelle des revendications précédentes, dans laquelle les première et deuxième crémaillères (1, 2) d'une part et la troisième crémaillère (8) d'autre part peuvent être déplacées longitudinalement les unes par rapport aux autres.

7. Une colonne de direction selon n'importe laquelle des revendications précédentes, dans laquelle les première et deuxième crémaillères (1, 2) ont chacune une pièce à distance de leurs dents sur laquelle agit un levier pivotant commun (5) prévu sur celle-ci afin d'exécuter l'opération de blocage.

8. Une colonne de direction selon la revendication 7, dans laquelle le levier pivotant (5) est monté sur une broche pivot (6) de façon à effectuer un déplacement par pivotement autour de la broche, et / ou le levier pivotant (5) et la broche de blocage inversable (4) de la revendication 4 sont prévus avec des surfaces concave et convexe en contact l'une avec l'autre (5A, 7A) autour desquelles le levier peut basculer, et / ou le levier pivotant (5) est prévu avec au moins une encoche (5B) dans laquelle au moins un point d'appui (7B) de la broche de blocage inversable de la revendication 4 peut s'emboîter pour permettre au levier de basculer.

9. Une colonne de direction selon la revendication 4 ou n'importe laquelle des revendications 5 à 8 telles qu'elles dépendent de la revendication 4, dans laquelle la force de blocage du dispositif de blocage est arrangée pour être fournie par l'effort appliqué sur une face d'extrémité de la broche de blocage inversable (4) et / ou une force supplémentaire est arrangée pour être appliquée au niveau de l'extrémité opposée de la broche inversable de façon à l'amener à faire office de broche de soulèvement pour permettre aux première et deuxième crémaillères (1, 2) de se soulever en évitant la troisième crémaillère (8).

10. Une colonne de direction selon la revendication 9, et incluant un arrangement à came prévu pour agir sur la broche inversable (4) pour produire le déplacement entraînant le blocage / la libération.

11. Une colonne de direction selon n'importe laquelle des revendications précédentes, dans laquelle les dents des première et deuxième crémaillères (1, 2) sont situées de façon à ce que les dents de l'une de ces crémaillères soient toujours décalées d'un demi-pas par rapport aux dents de la troisième crémaillère (8).

12. Une colonne de direction selon n'importe laquelle des revendications précédentes et incluant un moyen résilient prévu pour faire en sorte que les dents des première et deuxième crémaillères (1, 2) soient poussées en évitant les dents de la troisième crémaillère (8) lorsque le dispositif est dans son état non bloqué.

13. Un assemblage de colonne de direction réglable pour un véhicule selon n'importe laquelle des revendications précédentes, dans lequel la colonne de direction est réglable en inclinaison et / ou en profondeur.
